# EUROPEAN PATENT SPECIFICATION

(11) **EP 2 684 791 B1**
(45) Date of publication and mention of the grant of the patent: **01.06.2016**
(21) Application number: 13175951.6
(22) Date of filing: 10.07.2013
(51) Int. Cl.: B62M 25/08, B62M 6/45

(54) **Gear-shifting system for power - assisted bicycle**
Gangschaltvorrichtung für Hilfskraft-betriebenes Fahrrad
Dispositif de changement de vitesses pour bicyclette assistée

(30) Priority: 10.07.2012 TW 101124800
(43) Date of publication of application: 15.01.2014
(73) Proprietor: J.D Components Co., Ltd., Shou Shui Hsiang, Chang Hua Hsien (TW)
(72) Inventor: Cheng, Chi-Chang, 220 New Taipei City (TW)
(74) Representative: Becker Kurig Straus

(56) References cited:
- EP-A2- 1 457 415
- DE-A1-102010 017 412
- JP-A- H11 147 494
- JP-A- 2001 010 581
- US-A1- 2005 189 157

## Description

### BACKGROUND OF THE INVENTION

### 1. Technical Field

The present invention relates to gear-shifting operation for power-assisted bicycles, and more particularly, to a gear-shifting system for a power-assisted bicycle wherein the gear-shifting system determines its gear-shifting operation based on pedal positions.

### 2. Description of Related Art

In a conventional power-assisted bicycle, the microcomputer supplies the motor-generated assisting power only when a cyclist pedals the pedals. When the cyclist does not pedal, no assisting power is provided. This allows the cyclist to ride easier while preserving the joy of cycling. When a power-assisted bicycle runs, its microcomputer can determine whether to control the motor to adjust the assisting power according to terrains, speeds or shifts. In other words, the assisting power provided by the motor is subject to the control of the microcomputer and changes.

The conventional power-assisted bicycles usually has an automatic gear-shifting function, which realized by a gear-shifting logic built in the microcomputer. When the gear-shifting condition of the gear-shifting logic is fulfilled, such as reaching a predetermined speed, the microcomputer controls the corresponding transmission to perform a gear-shifting operation. The cyclist who is pedaling the pedals will feel variations in pedaling load and pedaling frequency due to the changed gear rate as a result of the gear-shifting operation. Also, the microcomputer may such configured that the cyclist can give it a gear-shifting command by pushing a gear-shifting button ear-shifting to direct it to perform the gear-shifting operation.

However, the conventional power-assisted bicycle may perform the gear-shifting operation while the cyclist is still pedaling the pedals, so the microcomputer tends to be confused by the cyclist's pedaling and believe the bicycle is in a normal state for which it should output the assisting power at an adequate level. The adequate assisting power, together with the force generated by the cyclist's pedaling, can make poor engagement of gears during the gear-shifting operation where the transmission is working on changing the gear rate. In a worse case, this may break the chain or damage the transmission.
DE-A-10 2010 017 412 discloses a system having the pre-characterizing features of claim 1.

### SUMMARY OF THE INVENTION

The primary objective of the present invention is to provide a gear-shifting system for a power-assisted bicycle. The gear-shifting system operates according to a pedal position of the power-assisted bicycle. Particularly, the gear-shifting system is configured to detect the pedal position, and uses the same for determining when to reduce the assisting power during its gear-shifting operation, thereby ensuring smooth gear-shifting and reducing the risk of damaging the chain and the transmission.

To this end, according to the present invention, a gear-shifting system for a power-assisted bicycle, wherein the gear-shifting system operates according to a pedal position of the power-assisted bicycle that has a motor and a gear shifter, the gear-shifting system comprising: a power supply module; a microcomputer, electrically connected to the power supply module and the motor, for controlling the assisting power output by the motor; a gear-shifting driver, electrically connected to the microcomputer, physically coupled to the gear shifter, and controlled by the microcomputer to drive the gear shifter to perform the gear-shifting operation; and a pedal position sensing module, deposited on the power-assisted bicycle and aligned with at least one crank of the power-assisted bicycle, and electrically connected to the microcomputer, so that the microcomputer can learn the angular position of the at least one crank from the pedal position sensing module; the microcomputer having a gear-shifting operation logic, and being configured to execute the gear-shifting operation logic when determining by itself that the gear-shifting operation shall be performed or when receiving a gear-shifting command from a cyclist; the microcomputer executing the gear-shifting operation logic by performing steps of: (1) when the angular position of the at least one crank passes through a first angular position, reducing the assisting power output by the motor to a first power value; (2) when the angular position of the at least one crank leaves the first angular position and passes through a dead point, minimizing the assisting power output by the motor; (3) controlling the gear-shifting driver to drive the gear shifter to perform the gear-shifting operation; (4) after the gear-shifting operation, returning the assisting power output by the motor to a level of the assisting power before the step (1).

Preferably, the dead point is the angular position of the at least one crank where a pedaling torque is minimal.

Preferably, the angular position associated with dead point is reached when a pedal position is at a zenith (0 degree) or a nadir (180 degree).

Preferably, the pedal position sensing module has a sensor.

Preferably, the sensor of the pedal position sensing module is a bottom bracket sensor installed in a bottom bracket of the power-assisted bicycle.

Preferably, the sensor of the pedal position sensing module is a photo-interrupter installed on a frame of the power-assisted bicycle.

Preferably, the gear-shifting operation logic further comprises, after the step (1), a step (1.1) in which when the angular position of the at least one crank passes through a second angular position, the microcomputer reduces the assisting power output by the motor to a second power value; and the step (2) is modified correspondingly to be: when the angular position of the at least one crank leaves the second angular position and passes through a dead point, the microcomputer minimizing the assisting power output by the motor.

Preferably, the first angular position of the step (1) of the gear-shifting operation logic is an angular position achieved when the pedal position is at 0 degree or 90 degree, in which the pedal position at a zenith is defined as 0 degree, and wherein the second angular position in the step (1.1) is 45 degrees or 135 degrees with respect to the horizontal.

Preferably, the first power value is equal to 50% of a maximum power value output by the motor and the second power value is equal to 30% of the maximum power value output by the motor, and wherein the assisting power output by the motor when minimized is equal to 10% of the maximum power value output by the motor.

Preferably, the first power value is equal to 30% of a maximum power value output by the motor, and the assisting power output by the motor when minimized is equal to 10% of the maximum power value output by the motor.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
FIG. 1 is a block diagram showing the relation between components in a first preferred embodiment of the present invention;
FIG. 2 is an applied view showing the first preferred embodiment of the present invention installed on a power-assisted bicycle;
FIG. 3 is a partial, enlarged view of the first preferred embodiment of the present invention, showing a BB sensor;
FIG. 4 is a flowchart according to the first preferred embodiment of the present invention, showing steps of a gear-shifting operation logic;
FIG. 5 is a schematic drawing according to the first preferred embodiment of the present invention, showing the crank angles with respect to various angular positions;
FIG. 6 is a flowchart according to a second preferred embodiment of the present invention, showing steps of a gear-shifting operation logic; and
FIG. 7 is a schematic drawing according to the second preferred embodiment of the present invention, showing the crank angles with respect to various angular positions.

### DETAILED DESCRIPTION OF THE INVENTION

For explaining the technical features of the present invention in detail, some preferred embodiment are described below with reference to the accompanying drawings.

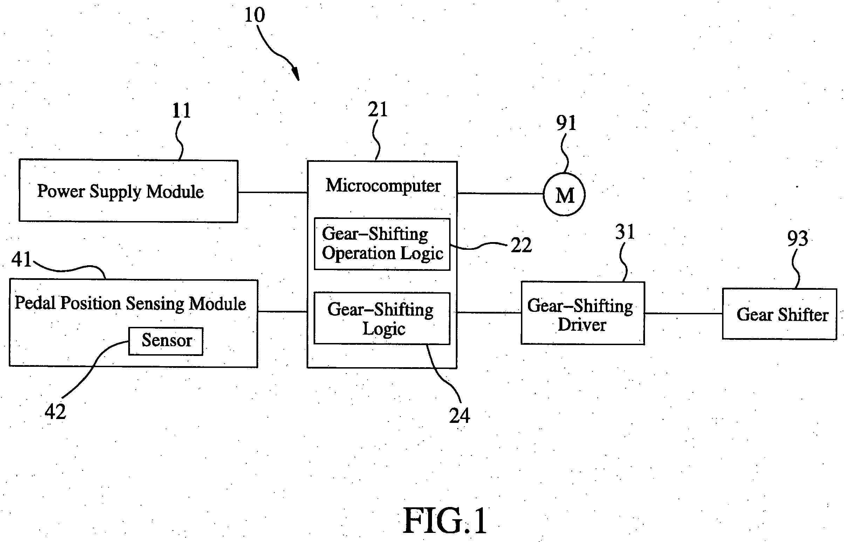

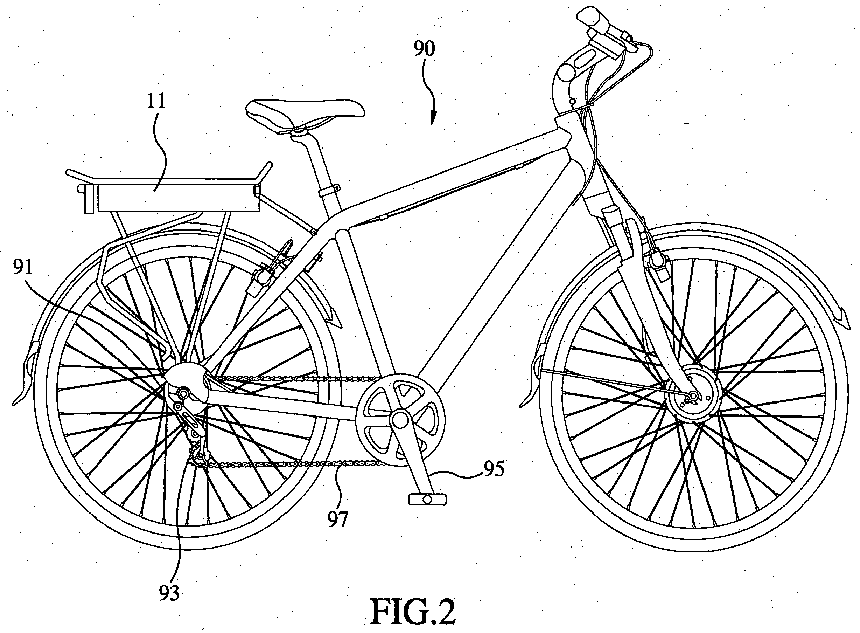

As shown in FIG. 1 through FIG. 5, according to one preferred embodiment of the present invention, a gear-shifting system 10 for a power-assisted bicycle operates according to pedal positions of the power-assisted bicycle. The power-assisted bicycle 90 has a motor 91 and a gear shifter 93 and the power-assisted bicycle gear-shifting system 10 primarily comprises a power supply module 11, a microcomputer 21, a gear-shifting driver 31 and a pedal position sensing module 41.

In the present embodiment, the power supply module 11 is a battery deposited on the power-assisted bicycle 90 and electrically connected to the motor 91, for providing power.

The microcomputer 21 is electrically connected to the power supply module 11 and the motor 91, for controlling the power supply module 11 and the assisting power output by the motor 91.

The gear-shifting driver 31 electrically connected to the microcomputer 21 and physically coupled to the gear shifter 93 is configured to be controlled by the microcomputer 21 to drive the gear shifter 93 to perform a gear-shifting operation.

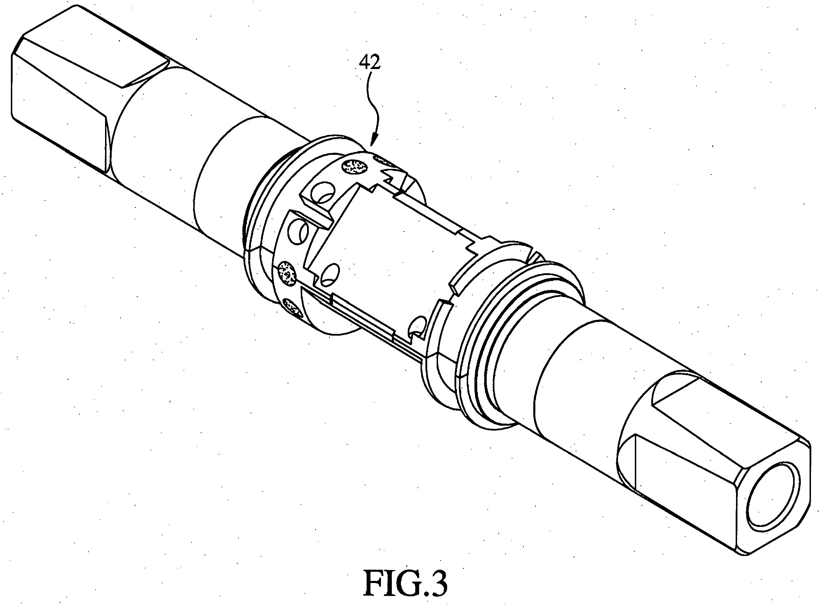

The pedal position sensing module 41 is deposited on the power-assisted bicycle 90 and aligned with at least one crank 95 of the power-assisted bicycle 90. The pedal position sensing module 41 is electrically connected to the microcomputer 21 so that the microcomputer 21 can be informed of an angular position of the at least one crank 95 by the pedal position sensing module 41. Since a bicycle typically has its two cranks always being at two angular positions separated by right 180 degrees, in practice, it is possible to detect the angular position only one of the crank and derive the other's angular position by adding the detected angular position with 180 degrees. However, the present invention is not limited to detecting one crank and it is of course feasible to detect the angular positions of the both cranks. In the present embodiment, the pedal position sensing module 41 has a sensor 42, which may be, for example, a bottom bracket sensor (BB sensor), as shown in FIG. 3, that is installed in the bottom bracket (not shown) of the power-assisted bicycle 90.

The microcomputer 21 has a gear-shifting operation logic 22. The microcomputer 21 executes the gear-shifting operation logic 22 when determining by itself that the gear-shifting operation shall be performed or when receiving a gear-shifting command from a cyclist. Therein, the microcomputer 21 may contain a conventional gear-shifting logic 24 in order to determine the timing for performing the gear-shifting operation. As to the cyclist's gear-shifting, it may be input by the cyclist to the microcomputer 21 through a gear-shifting button (not shown) conventionally provided on a handle.

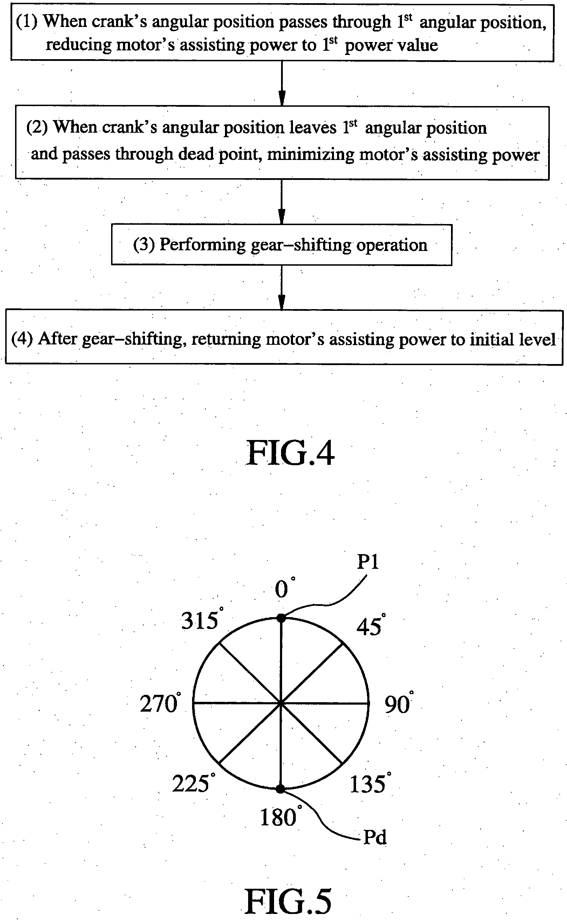

As shown in FIG. 4 and FIG. 5, the microcomputer 21 performs the gear-shifting operation logic 22 through the following steps. As the step (1), when the angular position of the crank 95 passes through a first angular position P1, the microcomputer 21 reduces the assisting power output by the motor 91 to first power value. In the first embodiment, the first angular position P1 is the angular position achieved when the pedal position is at 0 degree or 90 degrees. Taking 0 degree for example, the pedal position at its zenith is defined as 0 degree. The first power value is equal to, for example, 30% of the maximum power value output by the motor 91. As the step (2), when the angular position of the crank 95 leaves the first angular position P1 and passes through a dead point Pd, the microcomputer 21 minimize the assisting power output by the motor 91. In the first embodiment, the dead point Pd is the angular position of the crank 95 on which the pedaling torque is minimal, namely the angular position achieved when the pedal position is at its zenith (0 degree) or nadir (180 degree). The minimized assisting power output by the motor 91 is, for example, equal to 10% of the maximum power value output by the motor 91. As the step (3), the microcomputer 21 controls the gear-shifting driver 31 to drive the gear shifter 93 to perform the gear-shifting operation. As the fourth step, after the gear-shifting operation, the microcomputer 21 returns the assisting power output by the motor 91 to its level before the step (1) is conducted.

With the above-mentioned configuration, the first embodiment operates as below.

During normal riding without shifting the gear, a cyclist pedals the pedals to drive the cranks 95 to rotate, and the microcomputer 21 control the motor 91 to output appropriate assisting power as it normally does.

When the microcomputer 21 determines that the gear-shifting operation should be performed or receives the cyclist's gear-shifting command, it executes the gear-shifting operation logic 22. At this time, the microcomputer 21 uses the signal sensed by the pedal position sensing module 41 to determine the position of the crank 95. When the crank 95 passes through the first angular position P1 (e.g. at 0 degree), the microcomputer 21 reduces the assisting power output by the motor 91 to the first power value (i.e. 30% of the maximum output of the motor 91), and when the crank 95 proceed to a dead point Pd due to the cyclist's continuous pedaling, the microcomputer 21 minimizes the assisting power output by the motor 91 (i.e. 10% of the maximum output of the motor 91). Afterward, the microcomputer 21 performs the gear-shifting operation, and, after the gear-shifting operation, returns the assisting power of the motor 91 to its level before the gear-shifting operation. Therein, during the gear-shifting operation, since the assisting power of the motor 91 has been minimized, and the crank 95 is located at the dead point Pd (where the pedaling torque is minimal), the force acting on the chain 97 is at this time the minimal. Thus, this is the perfect timing for performing the gear-shifting operation as the resulting gear-shifting operation can be smooth and does not tend to damage the chain 97 or the gear shifter 93, thereby effectively reducing the risk of gear-shifting damage.

It is to be noted that the sensor 42 of the pedal position sensing module 41 is not limited to the BB sensor, and may alternatively be a photo-interrupter installed on the frame of the power-assisted bicycle 90. In this case, the sensor 42 can detect the angular position of the crank 95 when the crank 95 passing by block the light. Since such a photo-interrupter is known and frequently used in power-assisted bicycles for detection of crank position, the component is not shown in the drawings.

From the description above it is clear that the first embodiment functions by detecting the pedal position and use the same for determining when to reduce the assisting power for the smooth gear-shifting operation, thereby reducing the risk of damaging the chain 97 and the gear shifter 93.

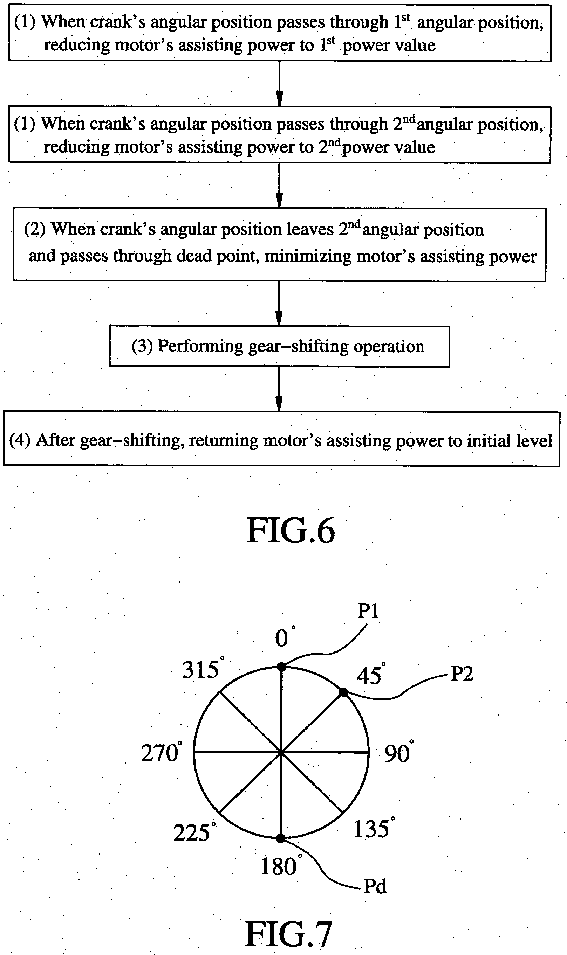

Referring to FIG. 6 and FIG. 7, in a second preferred embodiment of the present invention, a gear-shifting system 10' for a power-assisted bicycle operates according to the pedal position of the power-assisted bicycle, and is different from its counterpart in the first embodiment for the following features.

The gear-shifting operation logic 22' further incorporates a step (1.1) after the step (1), wherein then the angular position of the crank 95 passes through a second angular position P2, the assisting power output by the motor 91 is reduced to a second power value. Accordingly, the step (2) is modified as: when the angular position of the crank 95 leaves the second angular position P2, and passes through a dead point Pd, the microcomputer 21' minimizing the assisting power output by the motor 91.

In the second embodiment, the first angular position P1 is the angular position where the pedal position is at 0 degree or at 90 degrees, wherein the zenith of the pedal position is defined as 0 degree, and the second angular position P2 is defined as where the pedal position is at 45 degrees or 135 degrees, for example. The first power value may be 50%, and the second power value may be 30% of the maximum power value output by the motor 91, wherein both of the percentages are for example.

The second embodiment is also different from the first embodiment in the following operation. In the course that the microcomputer 21' executes the gear-shifting operation logic 22', when the crank 95 passes through the first angular position P1 (e.g. at 0 degree), the microcomputer 21' reduces the assisting power output by the motor 91 to the first power value (i.e. 50% of the motor's 91maximum output). When the crank 95 passes through the second angular position P2 (i.e. at 45 degrees), the microcomputer 21' reduces the assisting power output by the motor 91 to the second power value (i.e. 30% of the motor's 91 maximum output). When the crank 95 proceeds to a dead point Pd due to the cyclist's continuous pedaling, the microcomputer 21' finally minimize the motor's 91 assisting power (i.e. 10% of the motor's 91 maximum output). Afterward, the microcomputer 21' performs the gear-shifting operation. After the gear-shifting operation, the microcomputer 21' controls the motor 91 to output the assisting power as its level before the gear-shifting operation.

In the second embodiment, the second angular position P2 of the crank 95 is additionally considered, so that when the microcomputer 21' reduces the assisting power as a preparation for the gear-shifting operation, the assisting power is first reduced to 50% (at the first angular position P1), then to 30% (at the second angular position P2), and finally to the minimal level, 10% (at the dead point Pd). The relatively gradient reduction of the assisting power is helpful to prevent the cyclist from feeling uncomfortable due to steep decrease of the assisting power.

As the rest part of the configuration and functions of the second embodiment is similar to that of the first embodiment, no repeated description is made herein.

## Claims

1. A gear-shifting system (10)(10') for a power-assisted bicycle, wherein the gear-shifting system (10)(10') operates according to a pedal position of the power-assisted bicycle that has a motor (91) and a gear shifter (93), the gear-shifting system (10) comprising :
a power supply module (11);
a microcomputer (21)(21'), electrically connected to the power supply module (11) and the motor (91), for controlling an assisting power output by the motor (91);
a gear-shifting driver (31), electrically connected to the microcomputer (21)(21') and physically coupled to the gear shifter (93), so as to be controlled by the microcomputer (21)(21') to drive the gear shifter (93) to perform a gear-shifting operation; and
a pedal position sensing module (41), deposited on the power-assisted bicycle (90), aligned with at least one crank (95) of the power-assisted bicycle (90), and electrically connected to the microcomputer (21)(21'), so as to inform the microcomputer (21)(21') of an angular position of the at least one crank (95);
the microcomputer (21)(21') having a gear-shifting operation logic (22)(22'), and being configured to execute the gear-shifting operation logic (22)(22') when determining by itself that the gear-shifting operation shall be performed or when receiving a gear-shifting command from a cyclist; **characterized by** :
the microcomputer (21)(21') executing the gear-shifting operation logic (22)(22') by performing steps of: (1) when the angular position of the at least one crank (95) passes through a first angular position (P1), reducing the assisting power output by the motor to a first power value; (2) when the angular position of the at least one crank (95) leaves the first angular position (P1) and passes through a dead point (Pd), minimizing the assisting power output by the motor (91); (3) controlling the gear-shifting driver (31) to drive the gear shifter (93) to perform the gear-shifting operation; (4) after the gear-shifting operation, returning the assisting power output by the motor (91) to a level of the assisting power before the step (1).

2. The gear-shifting system (10) of Claim 1, being **characterized in that** the dead point (Pd) is the angular position of the at least one crank (95) where a pedaling torque is minimal.

3. The gear-shifting system (10) of Claim 2, being **characterized in that** the angular position associated with dead point (Pd) is reached when a pedal position is at a zenith (0 degree) or a nadir (180 degree) thereof.

4. The gear-shifting system (10) of Claim 1, being **characterized in that** the pedal position sensing module (41) has a sensor (42).

5. The gear-shifting system (10) of Claim 4, being **characterized in that** the sensor (42) of the pedal position sensing module (41) is a bottom bracket sensor installed in a bottom bracket of the power-assisted bicycle (90).

6. The gear-shifting system (10) of Claim 4, being **characterized in that** the sensor (42) of the pedal position sensing module (41) is a photo-interrupter installed on a frame of the power-assisted bicycle (90).

7. The gear-shifting system (10') of Claim 1, being **characterized in that** the gear-shifting operation logic (22') further comprises, after the step (1), a step (1.1) in which when the angular position of the at least one crank (95) passes through a second angular position (P2), the microcomputer (21') reduces the assisting power output by the motor (91) to a second power value, and wherein the step (2) is modified correspondingly to be: when the angular position of the at least one crank (95) leaves the second angular position (P2) and passes through a dead point (Pd), the microcomputer (21') minimizing the assisting power output by the motor (91).

8. The gear-shifting system (10') of Claim 7, being **characterized in that** the first angular position (P1) of the step (1) of the gear-shifting operation logic (22') is an angular position achieved when the pedal position is at 0 degree or 90 degrees, in which the pedal position at a zenith thereof is defined as 0 degree, and wherein the second angular position (P2) in the step (1.1) is an angular position achieved when the pedal position is at 45 degrees or 135 degrees.

9. The gear-shifting system (10') of Claim 7, being **characterized in that** the first power value is equal to 50% of a maximum power value output by the motor (91) and the second power value is equal to 30% of the maximum power value output by the motor (91), and wherein the assisting power output by the motor when minimized is equal to 10% of the maximum power value output by the motor (91).

10. The gear-shifting system (10) of Claim 1, being **characterized in that** the first power value is equal to 30% of a maximum power value output by the motor (91), and the assisting power output by the motor (91) when minimized is equal to 10% of the maximum power value output by the motor (91).

11. The gear-shifting system (10) of Claim 1, being **characterized in that** the first angular position (P1) of the step (1) of the gear-shifting operation logic (22) is an angular position achieved when the pedal position is at 0 degree or 90 degrees, in which the pedal position at a zenith is defined as 0 degree.

## Patentansprüche

1. Gangschaltungssystem (10)(10') für ein Fahrrad mit Hilfsantrieb, worin das Gangschaltungssystem (10)(10') nach einer Pedalposition des Fahrrads mit Hilfsantrieb arbeitet, das einen Motor (91) sowie eine Gangschaltung (93) aufweist, das Gangschaltungssystem (10) umfasst:
Ein Modul zur Bereitstellung der Hilfskraft (11),
einen Mikrocomputer (21)(21'), der elektrisch mit dem Modul zur Bereitstellung der Hilfskraft (11) und dem Motor (91) verbunden ist, um die Ausgabe der Hilfskraft von dem Motor (91) zu steuern,
einen Schalttreiber (31), der mit dem Mikrocomputer (21)(21') elektronisch verbunden ist und an der Gangschaltung (93) physikalisch gekoppelt vorliegt, um so durch den Mikrocomputer (21)(21') gesteuert zu werden, die Gangschaltung (93) anzutreiben, einen Gang zu wechseln, und
ein Modul zur Erfassung der Pedalposition (41), das an dem Fahrrad mit Hilfsantrieb (90) angeordnet und an wenigstens einer Kurbel (95) des Fahrrads mit Hilfsantrieb (90) ausgerichtet und mit dem Mikrocomputer (21)(21') elektrisch verbunden ist, um so den Mikrocomputer (21)(21') über eine Winkelposition der wenigstens einen Kurbel (95) zu informieren,
wobei der Mikrocomputer (21)(21') eine Gangschaltdurchführlogik (22)(22') aufweist und konfiguriert ist, die Gangschaltdurchführlogik (22)(22`) auszuführen, wenn er selbst feststellt, dass ein Gang gewechselt werden soll oder wenn er einen Gangschaltbefehl von einem Fahrradfahrer erhält, **dadurch gekennzeichnet, dass**:
Der Mikrocomputer (21)(21') die Gangschaltdurchführlogik (22)(22') durch die Schritte ausführt: (1) wenn die Winkelposition der wenigstens einen Kurbel (95) eine erste Winkelposition (P1) durchläuft, verringern der Ausgabe der Hilfskraft aus dem Motor auf einen ersten Kraftwert; (2) wenn die Winkelposition der wenigstens einen Kurbel (95) die erste Winkelposition (P1) verlässt und durch einen Totpunkt (Pd) läuft, minimieren der Ausgabe der Hilfskraft aus dem Motor (91); (3) steuern des Schalttreibers (31), um die Gangschaltung (93) dazu zu bringen, einen Gang zu wechseln; (4) nach dem Wechseln des Ganges zurückkehren der Hilfskraft aus dem Motor (91) auf ein Niveau der Hilfskraftausgabe vor Schritt (1).

2. Gangschaltungssystem (10) nach Anspruch 1, **dadurch gekennzeichnet, dass** der Totpunkt (Pd) die Winkelposition der wenigstens einen Kurbel (95) ist, bei der ein Pedaldrehmoment am geringsten ist.

3. Gangschaltungssystem (10) nach Anspruch 2, **dadurch gekennzeichnet, dass** die mit dem Totpunkt (Pd) verbundene Winkelposition erreicht ist, wenn eine Pedalposition einen Zenith (0 Grad) oder einen Tiefpunkt (180 Grad) erreicht hat.

4. Gangschaltungssystem (10) nach Anspruch 1, **dadurch gekennzeichnet, dass** das Modul zur Erfassung der Pedalposition (41) einen Sensor (42) aufweist.

5. Gangschaltungssystem (10) nach Anspruch 4, **dadurch gekennzeichnet, dass** der Sensor (42) des Moduls zur Erfassung der Pedalposition (41) ein Tretlagersensor ist, der in einem Tretlager des Fahrrads mit Hilfsantrieb (90) angeordnet ist.

6. Gangschaltungssystem (10) nach Anspruch 4, **dadurch gekennzeichnet, dass** der Sensor (42) des Moduls zur Erfassung der Pedalposition (41) ein Bildunterbrecher ist, der an dem Rahmen des Fahrrads mit Hilfsantrieb (90) angeordnet ist.

7. Gangschaltungssystem (10') nach Anspruch 1, **dadurch gekennzeichnet, dass** die Gangschaltdurchführlogik (22') ferner nach Schritt (1) weiter einen Schritt (1.1) umfasst, in dem wenn die Winkelposition der wenigstens einen Kurbel (95) eine zweite Winkelposition (P2) durchläuft, der Mikrocomputer (21') die von dem Motor (91) ausgegebene Hilfskraft auf einen zweiten Kraftwert verringert, und worin Schritt (2) entsprechend angepasst ist, um zu sein: Wenn die Winkelposition der wenigstens einen Kurbel (95) die zweite Winkelposition (P2) verlässt und durch einen Totpunkt (Pd) läuft, minimiert der Mikrocomputer (21') die Ausgabe der Hilfskraft aus dem Motor (91).

8. Gangschaltungssystem (10') nach Anspruch 7, **dadurch gekennzeichnet, dass** die erste Winkelposition (P1) des Schritts (1) der Gangschaltdurchführlogik (22') ein Winkelposition ist, die erreicht wird, wenn die Pedalposition bei 0 Grad oder 90 Grad steht, bei der die Pedalposition in ihrem Zenith als 0 Grad definiert ist, und worin die zweite Winkelposition (P2) in Schritt (1.1) eine Winkelposition ist, die erreicht wird, wenn die Pedalposition bei 45 Grad oder 135 Grad liegt.

9. Gangschaltungssystem (10') nach Anspruch 7, **dadurch gekennzeichnet, dass** der erste Kraftwert 50% einer maximalen Kraftausgabe des Motors (91) entspricht und der zweite Kraftwert 30% einer maximalen Kraftausgabe des Motors (91) entspricht, und dass die minimierte Kraftausgabe des Motors 10% einer maximalen Kraftausgabe des Motors (91) entspricht.

10. Gangschaltungssystem (10) nach Anspruch 1, **dadurch gekennzeichnet, dass** der erste Kraftwert 30% einer maximalen Kraftausgabe des Motors (91) entspricht, und dass die minimierte Kraftausgabe des Motors 10% einer maximalen Kraftausgabe des Motors (91) entspricht.

11. Gangschaltungssystem (10) nach Anspruch 1, **dadurch gekennzeichnet, dass** die erste Winkelposition (P1) des Schritts (1) der Gangschaltdurchführlogik (22) eine Winkelposition ist, die erreicht wird, wenn die Pedalposition 0 Grad oder 90 Grad beträgt, wobei die Pedalposition in ihrem Zenith als 0 Grad definiert ist.

## Revendications

1. Système de changement de vitesse (10)(10') destiné à un vélo à assistance électrique, où le système de changement de vitesse (10)(10') fonctionne selon une position de pédale du vélo à assistance électrique qui possède un moteur (91) et un changeur de vitesse (93), le système de changement de vitesse (10) comprenant :
un module d'alimentation électrique (11) ;
un micro-ordinateur (21)(21'), connecté électriquement au module d'alimentation électrique (11) et au moteur (91), pour commander une puissance d'assistance délivrée en sortie par le moteur (91) ;
un entraînement de changement de vitesse (31), connecté électriquement au micro-ordinateur (21)(21') et couplé physiquement au changeur de vitesse (93),
de façon à être commandé par le micro-ordinateur (21)(21') pour entraîner le changeur de vitesse (93) à effectuer une opération de changement de vitesse ; et
un module de détection de position de pédale (41), déposé sur le vélo à assistance électrique (90), aligné sur au moins une manivelle (95) du vélo à assistance électrique (90), et connecté électriquement au micro-ordinateur (21)(21'),
de façon à informer le micro-ordinateur (21)(21') d'une position angulaire de ladite au moins une manivelle (95) ;
le micro-ordinateur (21)(21') possédant une logique d'opération de changement de vitesse (22)(22'), et étant conçu pour exécuter la logique d'opération de changement de vitesse (22)(22') lors d'une détermination par lui-même que l'opération de changement de vitesse sera exécutée ou lors de la réception d'une commande de changement de vitesse d'un cycliste ; **caractérisé par** :
le micro-ordinateur (21)(21') exécutant la logique d'opération de changement de vitesse (22)(22') en effectuant les étapes consistant à: (1) lorsque la position angulaire de ladite au moins une manivelle (95) passe par une première position angulaire (P1), réduire la puissance d'assistance délivrée en sortie par le moteur à une première valeur de puissance ; (2) lorsque la position angulaire de ladite au moins une manivelle (95) quitte la première position angulaire (P1) et passe par un point mort (Pd), réduire au minimum la puissance d'assistance délivrée en sortie par le moteur (91) ; (3) commander l'entraînement de changement de vitesse (31) pour entraîner le changeur de vitesse (93) pour effectuer l'opération de changement de vitesse ; (4) après l'opération de changement de vitesse, ramener la puissance d'assistance délivrée en sortie par le moteur (91) à un niveau de la puissance d'assistance avant l'étape (1).

2. Système de changement de vitesse (10) selon la revendication 1, étant **caractérisé en ce que** le point mort (Pd) est la position angulaire de ladite au moins une manivelle (95) où un couple de pédalage est minimal.

3. Système de changement de vitesse (10) selon la revendication 2, étant **caractérisé en ce que** la position angulaire associée au point mort (Pd) est atteinte lorsqu'une position de pédale est à un zénith (0 degré) ou un nadir (180 degrés) de celle-ci.

4. Système de changement de vitesse (10) selon la revendication 1, étant **caractérisé en ce que** le module de détection de position de pédale (41) comporte un capteur (42).

5. Système de changement de vitesse (10) selon la revendication 4, étant **caractérisé en ce que** le capteur (42) du module de détection de position de pédale (41) est un capteur de pédalier installé dans un pédalier du vélo à assistance électrique (90).

6. Système de changement de vitesse (10) selon la revendication 4, étant **caractérisé en ce que** le capteur (42) du module de détection de position de pédale (41) est un photo-interrupteur installé sur un cadre du vélo à assistance électrique (90).

7. Système de changement de vitesse (10') selon la revendication 1, étant **caractérisé en ce que** la logique d'opération de changement de vitesse (22') comprend en outre, après l'étape (1), une étape (1.1) dans laquelle, lorsque la position angulaire de ladite au moins une manivelle (95) passe à travers une seconde position angulaire (P2), le micro-ordinateur (21') réduit la puissance d'assistance délivrée en sortie par le moteur (91) à une seconde valeur de puissance, et dans lequel l'étape (2) est modifiée à l'avenant pour devenir : lorsque la position angulaire de ladite au moins une manivelle (95) quitte la seconde position angulaire (P2) et passe à travers un point mort (Pd), le micro-ordinateur (21') réduit au minimum la puissance d'assistance délivrée en sortie par le moteur (91).

8. Système de changement de vitesse (10') selon la revendication 7, étant **caractérisé en ce que** la première position angulaire (P1) de l'étape (1) de la logique d'opération de changement de vitesse (22') est une position angulaire obtenue lorsque la position de pédale est à 0 degré ou 90 degrés, la position de pédale à un zénith de celle-ci étant définie comme 0 degré, et dans lequel la seconde position angulaire (P2) dans l'étape (1.1) est une position angulaire obtenue lorsque la position de pédale est à 45 degrés ou 135 degrés.

9. Système de changement de vitesse (10') selon la revendication 7, étant **caractérisé en ce que** la première valeur de puissance est égale à 50 % d'une valeur de puissance maximale délivrée en sortie par le moteur (91) et la seconde valeur de puissance est égale à 30 % de la valeur de puissance maximale délivrée en sortie par le moteur (91), et dans lequel la puissance d'assistance délivrée en sortie par le moteur lorsqu'elle est réduite au minimum est égale à 10 % de la valeur de puissance maximale délivrée en sortie par le moteur (91).

10. Système de changement de vitesse (10) selon la revendication 1, étant **caractérisé en ce que** la première valeur de puissance est égale à 30 % d'une valeur de puissance maximale délivrée en sortie par le moteur (91), et la puissance d'assistance délivrée en sortie par le moteur (91) lorsqu'elle est réduite au minimum est égale à 10 % de la valeur de puissance maximale délivrée en sortie par le moteur (91).

11. Système de changement de vitesse (10) selon la revendication 1, étant **caractérisé en ce que** la première position angulaire (P1) de l'étape (1) de la logique d'opération de changement de vitesse (22) est une position angulaire obtenue lorsque la position de pédale est à 0 degré ou 90 degrés, la position de pédale au zénith étant définie comme 0 degré.
